# EUROPEAN PATENT SPECIFICATION

(11) **EP 2 935 126 B1**
(45) Date of publication and mention of the grant of the patent: **25.03.2020**
(21) Application number: 13864250.9
(22) Date of filing: 20.12.2013
(51) Int. Cl.: C02F 1/463, C02F 1/58, C02F 9/04, C02F 9/06, C02F 101/10, C02F 103/10

(54) **METHOD OF TREATING INDUSTRIAL WATER**
VERFAHREN ZUR BEHANDLUNG VON BRAUCHWASSER
PROCÉDÉ DE TRAITEMENT DES EAUX INDUSTRIELLES

(30) Priority: 20.12.2012 FI 20126356
(43) Date of publication of application: 28.10.2015
(73) Proprietor: Outotec (Finland) Oy, 02230 Espoo (FI)
(72) Inventor: VAN DER MEER, Tuomas, 02230 Espoo (FI); NEVATALO, Laura, 02320 Espoo (FI); TANNINEN, Jukka, 02230 Espoo (FI)
(74) Representative: Kolster Oy Ab
(86) International application number: PCT/FI2013/051190
(87) International publication number: WO 2014/096549

(56) References cited:
- EP-A1- 1 313 668
- WO-A1-2005/121028
- WO-A1-2005/121029
- WO-A1-2014/033361
- JP-B2- 3 883 645
- US-A1- 2003 070 993
- US-A1- 2010 187 130
- US-A1- 2010 187 130
- US-B1- 6 280 630
- US-B1- 6 280 630
- US-B2- 6 887 368
- VISNJA ORESCANIN ET AL: "A combined CaO/electrochemical treatment of the acid mine drainage from the "Robule" Lake", JOURNAL OF ENVIRONMENTAL SCIENCE AND HEALTH. PART A: TOXIC HAZARDOUS SUBSTANCES AND ENVIRONMENTAL ENGINEERING, vol. 47, no. 8, 1 July 2012 (2012-07-01), pages 1186-1191, XP055229194, US ISSN: 1093-4529, DOI: 10.1080/10934529.2012.668405
- ORESCANIN V. ET AL.: 'A combined CaO/electrochemical treatment of the acid mine drainage from the ''Robule' JOURNAL OF ENVIRONMENTAL SCIENCE AND HEALTH, PART A (TOXIC/HAZARDOUS SUBSTANCES AND ENVIRONMENTAL ENGINEERING vol. 47, no. 8, 01 July 2012, pages 1186 - 1191, XP055229194 DOI: 10.1080/10934529.2012.668405
- MURUGANANTHAN M. ET AL.: 'Separation of pollutants from tannery effluents by electro flotation.' SEPARATION AND PURIFICATION TECHNOLOGY. vol. 40, no. 1, 15 November 2004, pages 69 - 75, XP004558241 DOI: 10.1016/J.SEPPUR.2004.01.005

## Description

### FIELD OF THE INVENTION

The present invention relates to treating and cleaning of industrial waters. The invention is a method for treating process and industrial waters, especially industrial waste waters. Particularly the invention provides a method of removing sulphate and metals, especially calcium and other soluble metals from water.

### BACKGROUND OF THE INVENTION

Sulphate is a common compound in metallurgical process streams and causes problematic gypsum precipitation with calcium. Gypsum blocks process piping and causes scaling of coating and surface of process equipment. Current methods of removing dissolved sulphate in waters include controlled gypsum precipitation, biological sulphate reduction and membrane separation. All of the methods have technical and economical limitations. Sulphate is not a toxic compound per se, thus the problems caused by sulphate are increased salinity and malfunctioning process equipment caused by gypsum precipitation. Even though sulphate has no direct toxic effects in the environment, the sulphate load in a receiving water increases salinity and causes secondary toxic effects, when sulphate is biologically reduced to toxic H₂S.

Sulphate removal by electrocoagulation (EC) has been studied e.g. for tannery effluent, acid mine drainage and various metal containing waste waters. However, the method of sulphate removal and the formed solids are not specified in the studies. Even more importantly, the decrease in sulphate concentrations is seldom presented or the tested concentrations are low (< 200 mg/l), the reason being that studies concentrate on removing of metals and chemical oxygen demand (COD) from different waters and the sulphate removal is reported as additional benefit of the treatment. Publicly reported studies discussing sulphate removal using EC with aluminium electrodes are scarce, and most of the studies report only removal of sulphate when original sulphate concentration was lower than 200 mg/l.

Orescanin et al. have published in "A combined CaO/electrochemical treatment of the acid mine drainage from the "Robule" Lake". Journal of Environmental Science and Health - Part A Toxic/Hazardous Substances and Environmental Engineering. Volume 47, Issue 8, Pages 1186-1191, a study wherein electrocoagulation was used with combination of iron and aluminium electrodes for treatment of acid mine drainage (AMD) containing up to 12 g/l sulphate. The AMD was pre-treated by adjusting pH to 7.4 with CaO. The reported sulphate removal by pH adjustment only was 71%: the sulphate concentration decreased from 12 g/l to 5 g/l after pH adjustment. The following electrocoagulation with Al-Fe anode combination resulted in final sulphate concentration of 3.5 g/l. After EC treatment the water pH was 6.7, which condition is not favourable for ettringite formation. The invention in the present application results in lower final sulphate concentrations in the treated water.

Muraganathan et al. reported in "Separation of pollutants from tannery effluents by electro flotation", Separation and Purification Technology 40 (2004) 69-75, a 22-23% sulphate removal from 1850-2400 mg/l original concentration for electroflotation treatment of tannery waste water with both Al and Fe anodes. For these tests the pH was only 8.5, thus ettringite formation is not expected due to low pH value.

Basha et al. reported in "Removal of arsenic and sulphate from the copper smelting industrial effluent", Chemical Engineering Journal. Volume 141, Issues 1-3, pages 89-98, sulphate removal during arsenic treatment with electrocoagulation, but the tested sulphate concentrations were below 50 mg/l. Similar results were reported by Murugananthan et al. in "Removal of sulfide, sulfate and sulfite ions by electro coagulation", Journal of Hazardous materials. Volume 109, Issues 1-3, pages 37-44, for treatment of tannery waste water, but also the tested sulphate concentration was 54 mg/l.

Electrocoagulation apparatuses are known in the art. For example WO 99/43617 discloses an apparatus for electrocoagulation treatment of liquids. The removal of sulphate by electrocoagulation with aluminium or iron/aluminium electrodes is also known from US2010/187130, US2003/070993, WO2005/121029.

Removal of sulphate as ettringite using aluminium compounds is known from US6280630 and EP1313668.

### Brief description of the invention

An object of the present invention is to provide a method so as to alleviate the disadvantages of the state of the art. The objects of the invention are achieved by a method which is characterized by what is stated in the independent claim. The preferred embodiments of the invention are disclosed in the dependent claims.

The method of removing sulphate and soluble metals such as calcium from water, comprises steps of a) precipitating a first part of the sulphate from the water by contacting the water with a first calcium compound and adjusting pH of the water to a range of from 10.5 to 13, wherein a first sludge containing gypsum and metal hydroxides is formed; b) subjecting, in one or more electrocoagulation units, the first sludge containing gypsum to the presence of at least one set of aluminium anodes to dissolve aluminium from said at least one set of aluminium anodes, or to the presence of at least one set of iron anode and aluminium anode to dissolve iron and aluminium from said at least one set of iron anode and aluminium anode, wherein in the step b) a second part of sulphate is precipitated as ettringite, which step b) is followed by a balancing step as a separate step, which balancing step is for providing the required retention time for precipitation of sulphate and in which balancing step the sludge is contacted with a second calcium compound for ensuring the optimal conditions for completing sulphate precipitation, wherein in the balancing step the pH of the process liquid is adjusted to the range of from 10.5 to 13 by using the second calcium compound; c) conducting the sludge formed in step a) and in step b) to solid-liquid separation, wherein precipitated solids are separated from the water; and d) neutralizing the water received from step c), wherein water decreased in sulphate and soluble metal such as calcium content is provided.

Conventional gypsum precipitation methods cannot decrease the sulphate concentration much below 1400 mg/l. This invention is based on the finding that sulphate precipitation as ettringite (Ca₆Al₂(SO₄)₃(OH)₁₂^{∗}26H₂O) after gypsum precipitation enables the decrease of the sulphate concentration even close to zero. By ettringite precipitation even the sulphate associated to the highly soluble sodium and potassium sulphates can be completely or partially removed.

Further the present invention is based on the idea of precipitating sulphate by electrocoagulation by selecting the working anodes and precipitation conditions such that ettringite, aluminium sulphate hydroxides and/or iron-aluminium sulphate hydroxides are precipitated thereby removing the sulphate from water. Electrocoagulation with aluminium or iron-aluminium anodes produces aluminium ions or aluminium and iron ions into the water to be treated when electric current is applied.

An advantage of the present invention is that clean water is provided from which sulphate, calcium and other soluble metals have been removed. Another advantageous feature of the method of the invention is that the use of expensive aluminium compounds traditionally used in the ettringite precipitation can be replaced by relatively cheap aluminium anodes. Even more importantly, the required aluminium is provided in the electrocoagulation to the process without undesired dissolving counter ions, such as chloride from aluminium chlorides or sodium from sodium aluminate, which is typical for the use of typical technical grade aluminium chemicals. In electrocoagulation aluminium is dissolved from the anodes as aluminium ions and hydrated in the water without the disturbing counter ions. This ensures that the total ion concentration of the treated effluent is remarkably lower and therefore enables the water to be of required quality for recycling back to the industrial process. The process conditions in the present invention are selected so that the precipitation of ettringite and/or aluminium/iron sulphate hydroxides is facilitated. This is done by ensuring the presence of soluble calcium, soluble aluminium and hydroxide ions and sufficiently high pH.

The water suitable for treating in accordance with the method of the present invention may be any water from which it is desired to remove sulphate, calcium and/or other soluble metals. Typically the water is process water or effluent, more typically the water is sulphate-containing water, such as mine water, recycle water from concentrator or discharge water from concentrator.

The method of the present invention is especially suitable for treating the waste waters from concentrators, where sulphate is a problem in recycle or discharge streams. The specific problem in concentrator's plant waters is the simultaneous high sulphate and calcium load, making the configuration of the present invention feasible. Concentrators may also use sulphidic chemicals in flotation process and these may in addition produce thiosalts, such as thiosulphate, polythionates and other sulphur compounds, during milling and flotation stages. The sulphur compounds convert over time to sulphate.

### BRIEF DESCRIPTION OF THE DRAWINGS

In the following the invention is described in more detail by means of preferred embodiments with reference to the attached drawings, in which
Figure 1 is a flow diagram of an example embodiment of the invention;
Figure 2 is a flow diagram of an example embodiment of the invention;
Figure 3 is a flow diagram of an example embodiment of the invention;
Figure 4 is a flow diagram of an example embodiment of the invention;
Figure 5 is a flow diagram of an example embodiment of the invention;
Figure 6 is diagram showing sulphate removal in tests 1 to 4;
Figure 7 is a block diagram of a pH adjustment equipment preceding the electrocoagulation according to an exemplary embodiment; and
Figure 8 is a flow diagram of a control of a pH adjustment equipment preceding the electrocoagulation according to an exemplary embodiment;
Figure 9 is a block diagram of exemplary pH adjustment in a separate balancing equipment;
Figure 10 is an exemplary flow diagram of a pH adjustment in the exemplary equipment of Figure 9;
Figure 11 is a block diagram of exemplary arrangement for adjusting the feed of electric power in the electrocoagulation step.

### DETAILED DESCRIPTION OF THE INVENTION

The invention relates to a method for removing sulphate, calcium and/or other soluble metals from water. The selection of the steps of the method of removing of sulphate and soluble metals such as calcium is done based on the initial chemical composition of the water to be treated by the method. The mentioned chemical composition of the water comprises sulphate concentration, concentration of Na, K and Ca ions and the amount of gypsum which is precipitateable. The chemical composition of the water is related to the desired stoichiometric amount of ettringite precipitated. The amount of sulphate which can be precipitated as gypsum depends on the concentration of Na, K and Ca in the water to be treated.

According to the invention the method of removing sulphate and soluble metals such as calcium from water comprises
a) precipitating a first part of the sulphate from the water by contacting the water with a first calcium compound and adjusting pH of the water to a range of from 10.5 to 13, wherein a first sludge containing gypsum and metal hydroxides is formed,
b) subjecting, in one or more electrocoagulation units, the first sludge containing gypsum to the presence of at least one set of aluminium anodes to dissolve aluminium from said at least one set of aluminium anodes, or to the presence of at least one set of iron anode and aluminium anode to dissolve iron and aluminium from said at least one set of iron anode and aluminium anode, wherein in the step b) a second part of sulphate is precipitated as ettringite, which step b) is followed by a balancing step as a separate step, which balancing step is for providing the required retention time for precipitation of sulphate and in which balancing step the sludge is contacted with a second calcium compound for ensuring the optimal conditions for completing sulphate precipitation, wherein in the balancing step the pH of the process liquid is adjusted to the range of from 10.5 to 13 by using the second calcium compound,
c) conducting the sludge formed in step a) and in step b) to solid liquid separation, wherein precipitated solids are separated from the water,
d) neutralizing the water received from step c), wherein water de creased

in sulphate and soluble metal such as calcium content is provided.

In the first pH adjustment step dissolved metal ions with oxidation stage between +1 to +3 are precipitated as hydroxides.

The method of the invention comprises a first pH adjustment step, where the first part of sulphate and metal hydroxides are precipitated, and wherein the water to be treated is contacted with a first calcium compound for producing a first sludge containing gypsum and metal hydroxides and adjusting the pH of the first sludge to be from 10.5 to 13. According to an embodiment of the invention the first calcium compound in the first pH adjustment step is selected from the group consisting of calcium hydroxide, calcium oxide, calcium carbonate and a mixture thereof.

Typically the first calcium compound in the first pH adjustment step (a) is calcium hydroxide, which enables the precipitation of soluble sulphates depending on the pH-dependent solubilities of the counter-cations, especially K, Na and Ca, of the soluble sulphate species. Sulphate and metal impurities from the solution will typically precipitate according to the following equation:

SO₄²⁻+Ca(OH)₂+Me⁺/ Me²⁺/Me³⁺->MeOH/Me(OH)₂ / Me(OH)₃+CaSO₄ (1)

Typical metal impurities are divalent or trivalent metals. Typically in the first pH adjustment step most of the metal impurities, including magnesium sulphate, are precipitated as hydroxides at pH from 10.5 to 13, more typically from 11 to 12. The solubility of gypsum in the specific process conditions, such as in the presence of potassium and sodium, defines the final dissolved sulphate concentration in the solution (water). Sulphate concentration in gypsum saturated solution is typically about 1200 to 1600 mg/l. However, the presence of high concentration of sodium and potassium sulphate can cause the final sulphate level to be higher as these sulphates are highly soluble even at very high pH.

According to one embodiment of the invention the pH of the first sludge in the first pH adjustment step is adjusted to be in the range from 10.5 to 13. More preferably the pH is in the range of 11 to 12. The pH is adjusted by adding a suitable amount of the selected first calcium compound into the first process liquor. Typically the dosing of the calcium compound is adjusted and controlled through measuring and monitoring the pH of the process liquor, alternatively it can be done on the basis of the existing calcium concentration.

The method of the invention comprises at least one electrocoagulation step performed after the first pH adjustment step, when in the electrocoagulation step the first sludge containing gypsum is subjected to electrocoagulation in the presence of a set of aluminium anodes or in the presence of a set of iron anode and aluminium anode for producing a second sludge containing ettringite and/or calcium-aluminium/iron-sulphate hydroxides and gypsum. The set of anodes comprises at least two anodes. Typically the number of anodes used in the method depends on the amount of water to be treated and/or size of the apparatus. The purpose of the electrocoagulation is to produce ions in the process liquor for precipitating sulphate as ettringite. The method of the invention may also comprise more than one electrocoagulation steps. A second or further electrocoagulation step is performed when more treatment time or efficiency is needed or more capacity for treatment of a large amount of water is needed. Alternatively more than two electrodes may be used in the electrocoagulation step(s). A further alternative is to increase the amount of current used in the electrocoagulation step(s). The second or further electrocoagulation step may be performed in the same way as the first electrocoagulation step.

According to the invention the electrocoagulation step after the first pH adjustment step is followed by a separate balancing step. Typically this is realised with arranging a separate balancing section in the electrocoagulation cell for example in different sections of an electrocoagulation tank.

According to the invention the electrocoagulation step is followed by a balancing step as an additional process step. In such a case the electrocoagulation step typically comprises an electrocoagulation cell and a separate balancing tank in connection with the electrocoagulation cell. In both embodiments the second sludge is contacted with a second calcium compound for adjusting the pH, for providing calcium ions and for producing longer retention time for the precipitation of ettringite. This enables suitable conditions for ettringite precipitation. In the balancing step the precipitation reaction of ettringite is forced to complete by adjusting the conditions and giving retention time

In the context of the present invention electrocoagulation means an electrocoagulation (EC) process, wherein the coagulant is generated in situ by electrolytic oxidation of an appropriate anode material. Consumable metal plates, such as iron or aluminium, are usually used as sacrificial electrodes to continuously produce ions in the water. As in the case of chemical coagulation with metal salts, aluminium or iron cations and hydroxides anions are the reagents in EC. The released ions remove undesirable contaminants either by chemical reaction and precipitation, or by causing the colloidal materials to coalesce.

EC systems are typically constructed of a set of electrodes (usually in form of plates), through which water flows between the spaces of the electrodes. Typically, direct current (DC) has been used in EC systems.

According to one preferred embodiment of the invention the method comprises two or more electrocoagulation steps connected in series. In an embodiment of the invention there is one common balancing step after the two or more electrocoagulation steps connected in series. According to another embodiment the invention comprises more than one electrocoagulation steps each involving a balancing step. According to a further embodiment of the invention the first, second and further electrocoagulation steps are each followed by a separate balancing step.

According to an embodiment of the invention the method comprises two or more electrocoagulation steps connected in parallel. In such cases the method comprises typically also a second or further balancing step between the first and the second and/or subsequent electrocoagulation steps. In an embodiment of the invention there is one common balancing step after the two or more electrocoagulation steps connected in parallel. According to one more embodiment of the invention the first, second and further electrocoagulation steps in parallel each involve a balancing step. According to a further embodiment of the invention the first, second and further electrocoagulation steps are each followed by a separate balancing step.

The electrocoagulation step is followed by a balancing step as a separate, additional step.

In the balancing step(s) the pH of the process liquid is adjusted by a suitable compound to be in the range of 10.5 to 13, more typically from 11 to 12. The pH is adjusted by using a second calcium compound selected from the group consisting of calcium hydroxide, calcium oxide, calcium carbonate and a mixture thereof. Typically the balancing is performed in the same manner as the first pH adjustment step. The purpose of the addition of the second calcium compound in the balancing is to ensure that the pH is in the range suitable for ettringite precipitation and that appropriate concentration of calcium ions is present for ettringite precipitation. This enables the completion of ettringite precipitation and enables efficient sulphate removal resulting in a very low concentration of sulphate in the water solution. The retention time in the actual electrocoagulation phase is typically short, so it is also desired that the ettringite precipitation takes place or continues in the balancing step(s) and hence, another purpose of the balancing is to provide longer retention time for the process and for the reactions to complete.

The electrocoagulation step comprises a set of aluminium anodes or a set of aluminium anode and a set of iron anode. According to another embodiment of the invention the electrocoagulation step comprises more than one set of aluminium anodes or more than one set of aluminium anode and iron anode.

According to an embodiment of the invention the anodes are made of aluminium, which contain recycled aluminium or virgin aluminium. According to another embodiment the anodes are made of iron or steel, which may contain recycled or virgin material. Typically the anodes can be made of any suitable aluminium or iron ion source.

The retention time in the electrocoagulation step including the balancing step(s) is preferably between 5 to 60 minutes, more preferably from 15 to 30 minutes. The retention time used depends on the implementation of the electrocoagulation step.

The second calcium compound to be fed to the balancing step(s) is selected independently from the group consisting of calcium hydroxide, calcium oxide, calcium carbonate and a mixture thereof.

After the electrocoagulation step the method comprises a separation step, wherein a solid-liquid separation is performed for the second sludge containing precipitated ettringite and/or calcium-aluminium/iron sulphate hydroxides and gypsum for separating solids from the liquid. The solid-liquid separation is typically performed by any suitable equipment for separating solids from liquid, such as a settling device, a filter, a clarifier, a lamella clarifier, hydrocyclone or decanter. One or more of these equipments may be used in any combination if necessary. Typically the solid-liquid separation step comprises a clarifier, such as a conventional round clarifier with an optimized feed well design followed by a filtration unit to further dewater the produced clarifier underflow.

According to an embodiment of the invention a part of the water from the solid-liquid separation step is recycled back to the electrocoagulation step in order to dilute and thus affect the inoic strength of the feed to the electrocoagulation unit.

After the solid-liquid separation the liquid obtained is routed to a neutralisation step wherein the liquid obtained from the first separation step is neutralised thereby producing a waste water with reduced sulphate, calcium, and/or other soluble metals content.

According to an embodiment of the invention the neutralisation is performed by contacting the liquid obtained from the separation step with a neutralising agent for neutralising the liquid and precipitating calcium contained in the liquid as calcium compound. According to an embodiment of the invention the neutralisation may be performed by contacting the solution with a carbonating agent for neutralising the solution and precipitating calcium contained in the first solution as calcium carbonate. The carbonating agent may be any suitable carbonating agent, such as CO₂, sodium carbonate or sodium bicarbonate. Preferably the carbonating agent is CO₂. If sodium carbonate is used, also acid can be fed to the neutralisation step. The neutralisation step is preferably performed by decreasing the pH and precipitating calcium as calcium carbonate (CaCO₃) by adding CO₂ to the first solution. If the calcium concentration (Ca-hardness) needs to be lowered further a sodium hydroxide (NaOH), or other alkaline, stream may be added to the process step thereby allowing further removal of Ca as CaCO₃ by adding alkalinity and avoiding the pH to decrease to the unfavourable area for CaCO₃ precipitation, below pH 8 to 9. According to an embodiment of the invention in the neutralisation step the first solution is contacted with an alkaline, such as sodium hydroxide, for increasing the precipitation of calcium as calcium carbonate. The carbon dioxide is used for both neutralising the solution and for removing the calcium hardness from the solution. The neutralisation and calcium precipitation reactions for CO₂ neutralisation may be summarized by the following equations:

CO₂ + H₂O -> CO₃²⁻ + 2 H⁺ (2)

CO₃²⁻ + Ca²⁺ -> CaCO₃ (3)

H⁺ + OH⁻ -> H₂O (4)

According to an embodiment of the invention the neutralization is performed by using hydrochloric acid or an organic acid.

According to an embodiment of the invention the neutralisation is performed by diluting the liquid obtained from the first separation step with water. The water may be any available water with sufficient quality and pureness.

The gypsum and ettringite are separated before the neutralisation step, as the lowering of the pH increases the solubility of the precipitated ettringite. It is possible to recycle the calcium carbonate solids to the beginning of the process to be used as neutralising agent to acidic waste waters to be processed. Calcium carbonate may also be used for producing alkaline buffering capacity for the gypsum and ettringite residues.

According to an embodiment of the invention the method comprises an optional second separation step a') between steps a) and b) wherein the gypsum contained in the first sludge is separated from the first sludge by solid liquid separation before the first sludge is routed to electrocoagulation step b). In the second separation step a'), which may also be called a gypsum removal step, a solid-liquid separation is performed for removing precipitated gypsum from the first sludge. The presence of the optional solid-liquid separation step (or the presence of the separation unit if apparatus is in question) may be selected on the basis of the amount of gypsum solids formed in the first pH adjustment step. The optional solid-liquid separation is typically performed so that the gypsum formed in step a) is separated from the first sludge, typically by a clarifier.

According to an embodiment of the invention the electrocoagulation step may be performed in the sludge containing gypsum, i.e. without the optional second solid-liquid separation step. Thus, according to an embodiment of the invention the method does not contain a solid-liquid separation step between the pH adjustment step a) and the electrocoagulation step b). According to an embodiment of the invention the method comprises an optional second balancing step b') between steps b) and c), According to an embodiment of the invention the method comprises a second electrocoagulation step b") between steps b) and c). According to a further embodiment of the invention the method comprises a second electrocoagulation step b") between steps b') and c). Typically the second electrocoagulation step is performed if more than one electrocoagulation steps are needed. According to an embodiment of the invention the method comprises a third balancing step after the second electrocoagulation step.

The method of the invention may also comprise a third or further electrocoagulation step between the steps b) and c), steps b') and c) or steps b") and c). The purpose of the second or further electrocoagulation step and the second or further balancing step is to add retention time to the process and enhance sulphate removal.

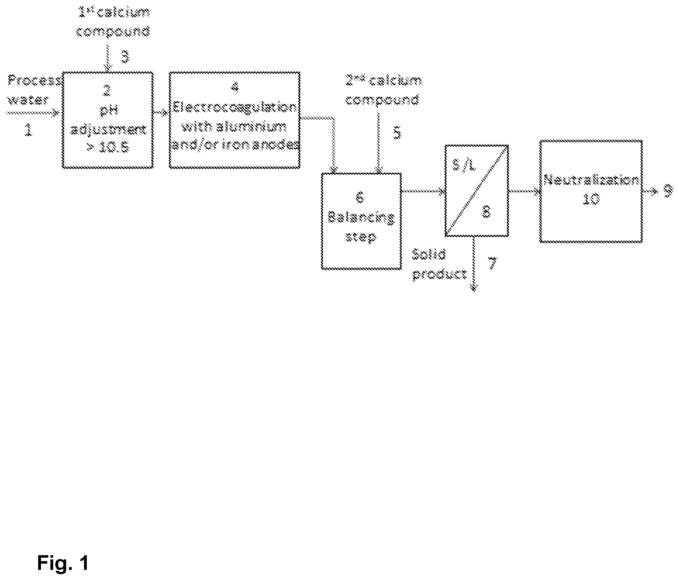

Figure 1 is a flow diagram of one embodiment of the invention wherein the water to be treated, process water 1 is fed to a pH adjustment step 2, wherein the pH of the solution is adjusted to between 10.5 and 13 using a first calcium compound 3 selected from the group consisting of calcium hydroxide, calcium oxide, calcium carbonate and a mixture thereof. In the pH adjustment step 2 gypsum precipitates due to the contact with the first calcium compound. From the pH adjustment step 2 the water and formed sludge is directed to an electrocoagulation step 4, wherein ettringite is precipitated to the sludge by using aluminium anodes or aluminium and iron anodes. The electrocoagulation step is followed by a separate balancing step 6, wherein the retention time is adjusted to an appropriate length. The balancing step 6 may be implemented as a separate balancing cell outside the actual electrocoagulation cell. In such a case the tank of the balancing step is in fluid communication with the electrocoagulation cell. Second calcium compound 5 is added to balancing step 6 and the second calcium compound 5 is selected independently from the group consisting of calcium hydroxide, calcium oxide, calcium carbonate and a mixture thereof. When the method comprises the balancing step 6 the sludge containing gypsum, ettringite and other precipitated species is directed to a solid-liquid separation step 8, wherein a solid product 7 is separated from the sludge. The solid product comprises mainly ettringite and/or aluminium/iron sulphate hydroxides, gypsum and metal hydroxides. The liquid from the solid-liquid separation is directed to neutralisation 10, which may be performed in many different ways, as presented above. Typically the neutralisation is performed by diluting or by using a neutralising agent. Treated water is obtained from the method as stream 9.

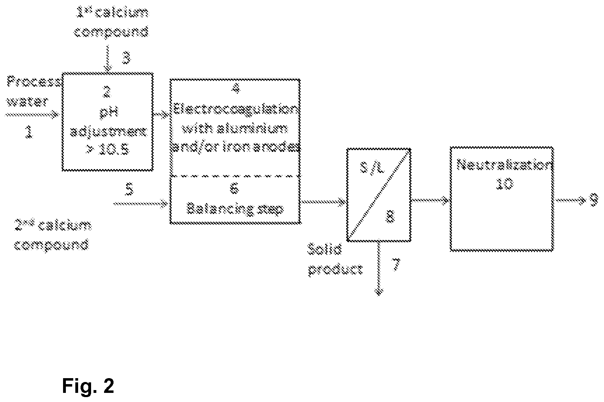

Figure 2 is another embodiment of the present invention, which is performed otherwise in the same way as the embodiment disclosed in Figure 1, except that the separate step 6 is an integral part of the configuration of the electrocoagulation cell.

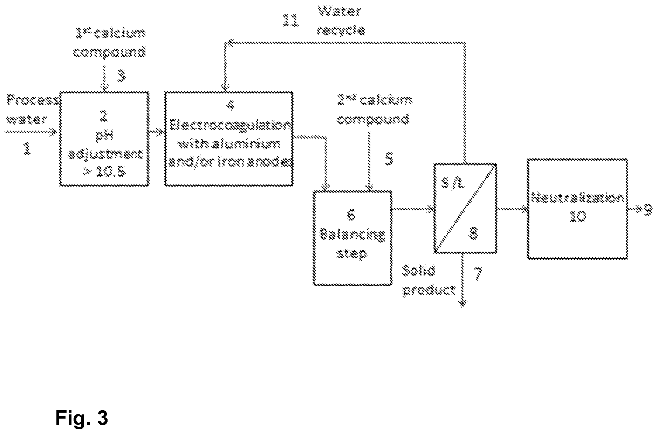

Figure 3 is a flow diagram of an embodiment of the present invention, which is performed otherwise in the same way as the embodiment disclosed in Figure 1, except that at least part of the water 11 is recycled from the solid-liquid separation step 8 back to the electrocoagulation step 2. Recycle of the treated water can sometimes be useful for diluting and thus changing the ionic strength of the feed to the electrocoagulation step.

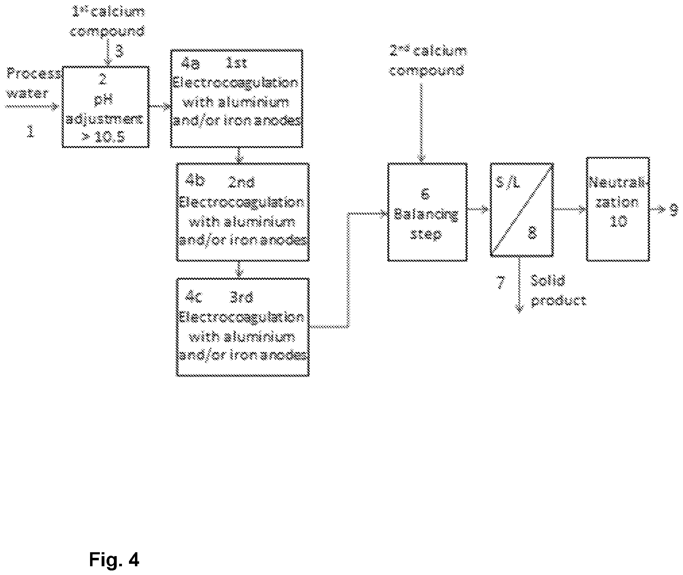

Figure 4 is an embodiment of the present invention, wherein the flow from the pH adjustment step 2 is directed to electrocoagulation steps 4a, 4b and 4c connected in series, wherein ettringite is precipitated in the sludge by using aluminium anodes or aluminium and iron anodes. Otherwise the process in done in the same way as described in connection with Figure 1. Even though in the Figure 4 the balancing step 6 is disclosed as a separate step, it may alternatively be also involved as an integral part in each of the electrocoagulation steps 4a, 4b and 4c.

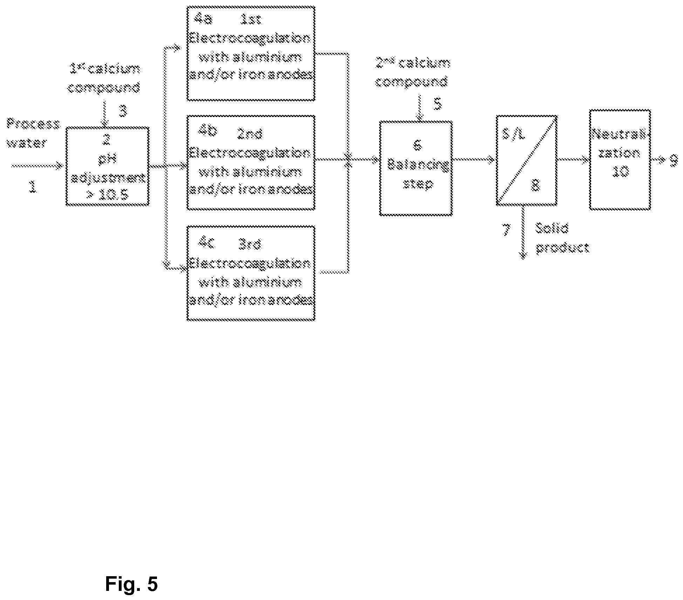

Figure 5 is an embodiment of the present invention, wherein the from the pH adjustment step 2 the formed sludge is directed to electrocoagulation steps 4a, 4b and 4c connected in parallel, wherein ettringite is precipitated in the sludge by using aluminium anodes or aluminium and iron anodes. Otherwise the process in done in the same way as described in connection with Figure 1. Even though in the Figure 5 the balancing step 6 is disclosed as a separate step, it may alternatively be also involved as an integral part in each of the electrocoagulation steps 4a, 4b and 4c.

As described above, a maintaining and thereby control of optimal precipitation conditions in the electrocoagulation step is desired.

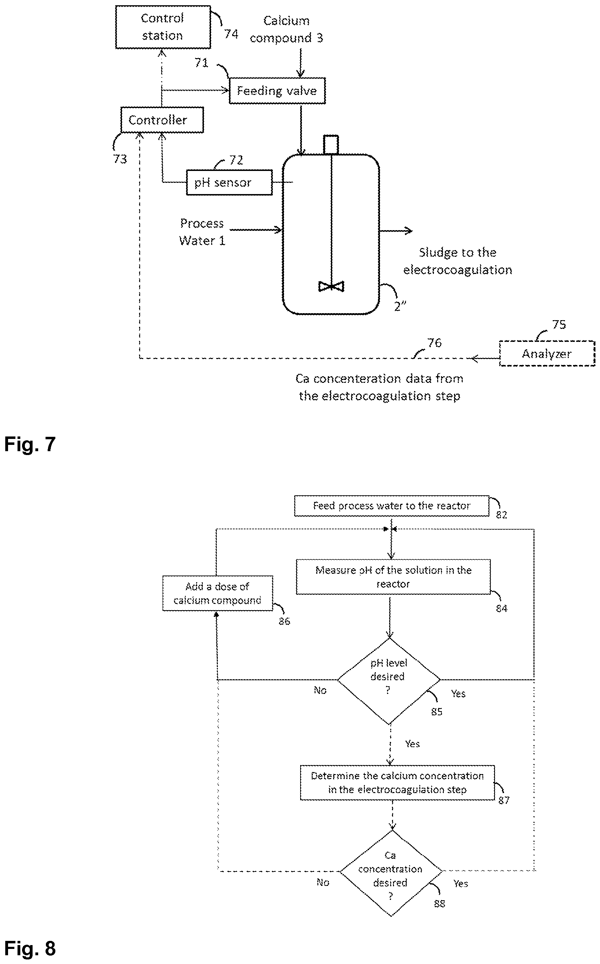

Figure 7 is a block diagram of exemplary pH adjustment equipment located upstream of the electrocoagulation step or equipment. In the illustrated example, the pH adjustment equipment which may implement the pH adjustment step 2 described above, may comprise a stirred reactor tank 2", and necessary inlets and outlets for providing and recovering process streams, e.g. an incoming process water stream 1 and an outgoing sludge stream to a to the electrocoagulation step. Examples of commercial reactors applicable for precipitation reactor 2" include OKTOP® reactors manufactured by Outotec. The reactor tank 2" may further comprise inlets for feeding a calcium compound 3, as those described above. The feed of the calcium compound 3 to the reactor tank 2" may be controlled by a feeding valve 71 that may be any type of process control valve. Alternatively, a pump may be used instead of valve 71. Further, a pH measurement unit or sensor 72 may be provided to measure the pH of the solution in the tank. A pH measurement signal from the pH sensor 72 may be inputted to a controller unit 73 which is configured to control the feeding valve 71. The control signal from the controller 73 may be applied also to a control station 74 of the water processing system. The control station 74 may be, for example, a process control system or a control room computer. In an exemplary embodiment, the controller 73 may be part of the control station 74, in which case the pH measurement may be supplied to the control station 74 which is configured to control the feeding valve 71. The controller 73 may optionally receive calcium concentration data 76 determined based on sampling at the following electrocoagulation step or equipment, the subsequent piping or the balancing step. The sampling of the process material may be manual or automatic, and the calcium concentration data 76 may originate from an analyzer 75 analysing the sampled material.

An exemplary flow diagram of a pH adjustment and an optional adjustment of calcium concentration in the exemplary equipment of Figure 7 is illustrated in Figure 8. The control process may be an automatic or semi-automatic control. In a semiautomatic control some of the control phases, particularly the starting and ending of the process may be done manually e.g. from the control station 74 by an operator. First a process water stream 1 is fed to the reactor tank 2" (step 82). The pH of the solution in the reactor tank 2" may be measured by the pH sensor 72, and the pH measurement may be inputted to the controller 73 (step 84). The controller 73 may compare the measured pH level with a desired pH level, such as 10.5 to 12.5 (step 85). The desired pH level may be a threshold level, such as 10.5 that shall be exceeded or a pH range within which the pH shall be. If the measured pH level is not at the desired pH level, the controller 73 may control the feeding valve 72 to feed an additional dose of the calcium compound 3 into the reactor tank 2" (step 86) and the pH measurement (step 85) may be repeated. If the measured pH level is at the desired pH level, i.e. the process has received a steady state, the control procedure may directly return to the pH measurement 84 without feeding any additional dose of the calcium compound 3 into the reactor tank 2", when only the pH adjustment is implemented.

In an embodiment of the invention, an optional adjustment of calcium concentration of the solution in the electrocoagulation process is also implemented in pH adjusting step, e.g. in the reactor tank 2" of Figure 7. An exemplary flow diagram of the optional adjustment of the calcium concentration is illustrated by dashed lines in Figure 8. In the optional adjustment, if the measured pH level is at the desired pH level, i.e. the process has received a steady state at step, the controller 73 may proceed to determine the calcium concentration in the subsequent electrocoagulation process (step 87) and to compare the determined Ca concentration with a desired Ca concentration for achieving the desired conditions for the ettringite precipitation (e.g. sufficient Ca ions and pH), step 88. Determination step 87 may comprise receiving the Ca concentration data 76 from the subsequent electrocoagulation step. If the Ca concentration is not the desired Ca concentration, the controller 73 may proceed to step 86 to control the feeding valve 72 to feed an additional dose of the calcium compound 3 into the reactor tank 2" (step 86) and the pH measurement (step 85) may be repeated. If the Ca concentration is the desired Ca concentration, the control procedure may directly return to the pH measurement 84 without feeding any additional dose of the calcium compound 3 into the reactor tank 2". This type of pH control, Ca control and measurement loop may continue maintaining the process in the steady state.

The additive dose of the calcium compound fed in step may be any small amount. The size of the additive dose may depend on the difference between the measured pH and the desired pH, or the determined Ca concentration and the desired Ca concentration and/or it may depend on a time constant of the pH or Ca control loop. The size of the additive dose may be different for the pH control and the Ca control loop.

In an embodiment, only pH control may be implemented in the reactor tank.

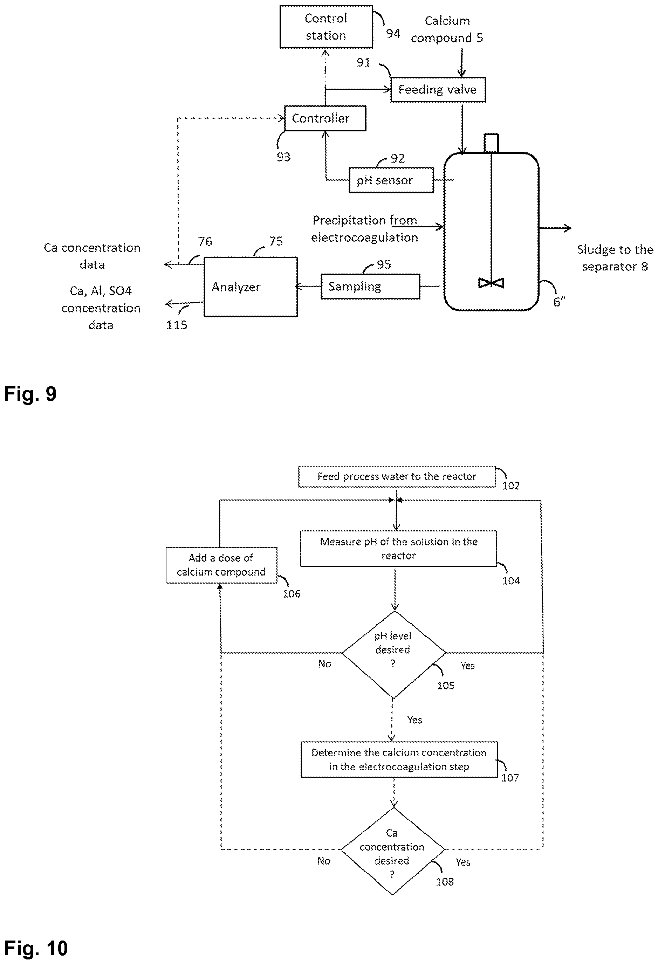

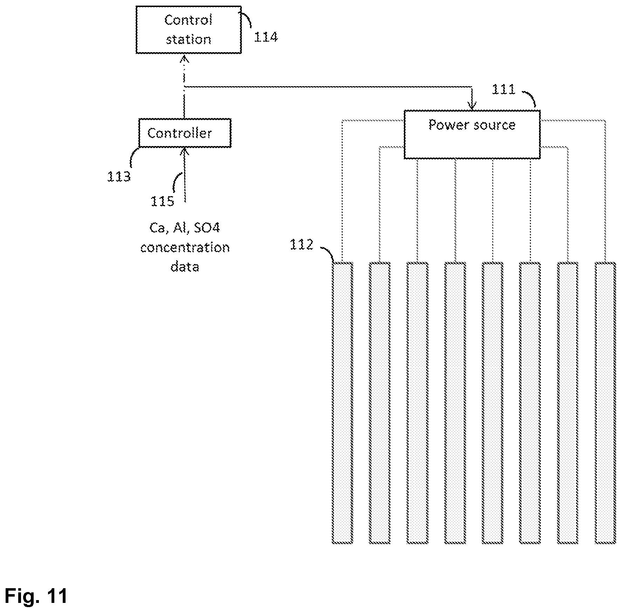

As discussed above, the balancing step may be implemented as physically integrated into the electrocoagulation cell (e.g. a compartment in the same equipment) or it may be implemented as a physically separate unit. Figure 9 is a block diagram of exemplary pH adjustment and an optional Ca concentration adjustment in a separate balancing equipment located downstream of the primary electrocoagulation step or equipment. In the illustrated example, the balancing equipment which may implement the balancing step 6 described above may comprise a stirred reactor tank 6", and necessary inlets and outlets for providing and recovering process streams, e.g. an incoming precipitation sludge and an outgoing sludge stream to a subsequent separator 8. Examples of commercial reactors applicable for reactor 6" include OKTOP® reactors manufactured by Outotec. The reactor tank 6" may further comprise inlet for feeding a calcium compound 5, as those described above. The feed of the calcium compound 5 to the reactor tank 6" may be controlled by a feeding valve 91 that may be any type of process control valve. Alternatively, a pump may be used instead of valve 91. Further, a pH measurement unit or sensor 92 may be provided to measure the pH of the solution in the tank. A pH measurement signal from the pH sensor 92 may be inputted to a controller unit 93 which is configured to control the feeding valve 91. The control signal from the controller 93 may be applied also to a control station 94 of the water processing system. The balancing equipment may further comprise an online sampling unit 95 taking samples from the solution in the tank for analysis in an online analyser 75. The analyser 75 may determine calcium concentration of the solution and provide respective concentration data 76 to the controller 93 of the balancing equipment, or to the controller 73 of the reactor in Figure 7, for example, or to both of them, or to any other control device using the Ca concentration data. The control station 94 may be, for example, a process control system or a control room computer. In an exemplary embodiment, the controller 93 may be part of the control station 94, in which case the pH measurement may be supplied to the control station 94 which is configured to control the feeding valve 91. In an embodiment, the controllers 73 and 93, and/or control stations 74 and 94 in the pH adjustment equipment and the balancing equipment may be implemented in a common unit. The analyser 75 may also determine aluminium (Al) and/or sulphate (SO₄) concentration in the solution and provide respective concentration Ca, Al and/or SO₄ concentration data 115 to the controller 113 in Figure 11, for example. It should be appreciated that sampling 95 may alternatively made in the electrocoagulation equipment, in the piping, etc. The sampling may also be manual. An exemplary flow diagram of a pH adjustment and an optional Ca concentration adjustment in the exemplary equipment of Figure 9 is illustrated in Figure 10. The control process may be an automatic or semi-automatic control. In a semiautomatic control some of the control phases, particularly the starting and ending of the process may be done manually e.g. from the control station 94 by an operator. First a precipitation sludge stream is fed to the reactor tank" (step 102). The pH of the solution in the reactor tank 6" may be measured by the pH sensor 92, and the pH measurement may be inputted to the controller 93 (step 104). The controller 93 may compare the measured pH level with a desired pH level, such as 10.5 to 12.5 (step 105). The desired pH level may be a threshold level, such as 10.5 that shall be exceeded or a pH range within which the pH shall be. If the measured pH level is not at the desired pH level, the controller 93 may control the feeding valve 91 to feed an additional dose of the calcium compound 5 into the reactor tank 6" (step 106) and the pH measurement (step 105) may be repeated. If the measured pH level is at the desired pH level, i.e. the process has received a steady state, the control procedure may directly return to the pH measurement 104 without feeding any additional dose of the calcium compound 5 into the reactor tank 3. This type of pH control and measurement loop may continue maintaining the process in the steady state.

In an embodiment of the invention, an optional adjustment of calcium concentration of the solution in the electrocoagulation process is also implemented in balancing equipment, in place of or in addition to the adjustment of calcium concentration in the reactor tank of Figure 7. An exemplary flow diagram of the optional adjustment of the calcium concentration is illustrated by dashed lines in Figure 10. in the optional adjustment, if the measured pH level is at the desired pH level, i.e. the process has received a steady state at step, the controller 93 may proceed to determine the calcium concentration in the electrocoagulation process (step 107) and to compare the determined Ca concentration with a desired Ca concentration for achieving the desired conditions for the ettringite precipitation (e.g. sufficient Ca ions and pH), step 108. Determination step 107 may comprise receiving the Ca concentration data 76 from the preceding electrocoagulation process, from the balancing tank, or any other source. In the illustrated example, the Ca concentration data 76 may be received from the analyser 75. If the Ca concentration is not the desired Ca concentration, the controller 93 may control the feeding valve 91 to feed an additional dose of the calcium compound 5 into the reactor tank 6" (step 106) and the pH measurement (step 104) may be repeated. If the Ca concentration is the desired Ca concentration, the control procedure may directly return to the pH measurement 104 without feeding any additional dose of the calcium compound 5 into the reactor tank 6". This type of pH control, Ca control and measurement loop may continue maintaining the process in the steady state.

The additive dose of the calcium compound fed in step may be any small amount. The size of the additive dose may depend on the difference between the measured pH and the desired pH, or the determined Ca concentration and the desired Ca concentration and/or it may depend on a time constant of the pH or Ca control loop. The size of the additive dose may be different for the pH control and the Ca control loop.

The additive dose of the calcium compound fed in step may be any small amount. The size of the additive dose may depend on the difference between the measured pH and the desired pH, and/or it may depend on a time constant of the pH control loop.

Figure 11 is a block diagram of exemplary arrangement for adjusting the feed of electric power in the electrocoagulation step. As noted above, the electrocoagulation (EC) systems are typically constructed of a set of electrodes 112 (usually in form of plates), through which water flows between the spaces of the electrodes in the electrocoagulation cell(s). An electric power source 111 is connected to feed an electric power to the electrodes 112. Typically, direct current (DC) has been used in EC systems. The electrodes may provide a monopolar or bipolar configuration. In the monopolar systems all anodes are connected to each other and similarly all cathodes are also connected to each other. In bipolar systems the outermost electrodes are connected to a power source and current passes through the other electrodes, thus polarising them. In the bipolar systems the side of the electrode facing the anode is negatively polarised and the other side is positively polarised. In an embodiment, the feed of electric power in the electrocoagulation cell(s) may be adjusted within the selected range according to a control loop based on analysis of the concentration of one or a combination of the elements Ca, Al and SO₄ in or after electrocoagulation. The Ca, Al and/or sulphate SO₄ concentration data 115 may be received to a controller 113 from the analyser 75 shown in Figure 8, for example. The controller unit 113 which is configured to control the power source 111. The control signal from the controller 113 may be applied also to a control station 114 of the water processing system. The control station 114 may be, for example, a process control system or a control room computer. In an exemplary embodiment, the controller 113 may be part of the control station 114 In an embodiment, the controllers 73, 93 and 113, and/or control stations 74, 94 and 114 in the pH adjustment equipment, the balancing equipment, and the electrocoagulation equipment may be implemented in a common unit.

The controller 113 may control the power source 111 to increase the feed of the electric power to the electrodes, if the Ca/Al/SO₄ concentration increases/decreases. For example, an increase in the Al concentration may cause the controller 113 to decrease the the electric power feed to the electrocoagulation cell and/or current density at the anode(s), because such increase of Al concentration indicates that more aluminium (Al) is dissolved than can be used for the ettringite precipitation reaction in the prevailing process conditions. As another example, if the Ca concentration is too low, the electric power feed to the electrocoagulation cell and/or current density at the anode(s) may be decreased to avoid unnecessary dissolution of the anodes. As still another example, if the SO₄ concentration is too high, the electric power feed to the electrocoagulation cell and/or current density at the anode(s)may be increased to increase the amount of dissolved aluminium required for the ettringite precipitation reactions to take place.

The control of feed of the electric power may be implemented by controlling the DC voltage level applied to the electrodes 112. As another example, the control of feed of the electric power may be implemented by selectively connecting and disconnecting the feed of the electric power to some of the electrodes 112. For example, number of energized electrodes may vary according to the Ca/Al/SO₄ concentration. The connection and disconnection may be implemented by an internal power switches in the power source, for example.

The control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors. The data storage medium or the memory unit may be implemented within the processor or external to the processor, in which case it can be communicatively coupled to the processor via various means as is known in the art. Additionally, components of systems described herein may be rearranged and/or complimented by additional components in order to facilitate achieving the various aspects, goals, advantages, etc., de-scribed with regard thereto, and are not limited to the precise configurations set forth in a given figure, as will be appreciated by one skilled in the art.

### EXAMPLES

Sulphate removal with electrocoagulation was tested using gypsum saturated mine water with pH >12. Before the electrocoagulation, the mine water pH adjustment was made with 300 g/l lime milk (Ca(OH)₂), and solid gypsum was separated. Four electrocoagulation tests were made, and each test included 1-3 electrocoagulation (EC) treatment cycles. During one cycle the water (2-4 I) was passed through the electrocoagulation cell using constant flow rate (1 l/min) and either aluminium anodes or combination of aluminium and iron anodes. The test variables were the following:
- Test 1: three sequential EC treatment cycles using aluminium anodes with no pH adjustment between EC treatment cycles
- Test 2: three sequential treatment cycles using aluminium anodes with pH adjusted to 12 with lime milk (Ca(OH)₂) after each EC treatment cycle
- Test 3: two sequential EC treatment cycles using aluminium anodes, pH ad-justed to 12 with lime milk (Ca(OH)₂) after each EC treatment cycle and using doubled power supply (i.e. doubled power supply compared to power supply used in tests 1-2)
- Test 4: two sequential EC treatment cycles using combination of aluminium and iron anodes, and with pH adjustment to 12 using lime milk (Ca(OH)₂) bet-ween EC treatment cycles.

The water samples were collected directly after each EC treatment cycle and analyzed for pH, soluble calcium, aluminium, iron, sulphate and sulphur. The pH adjustment to 12 with lime milk for tests 2-4 was made only after the water sample was collected for chemical analysis. For second and following EC treatment cycles the water was fed to the EC cell as such with no other treatment but pH adjustment to 12 with lime milk.

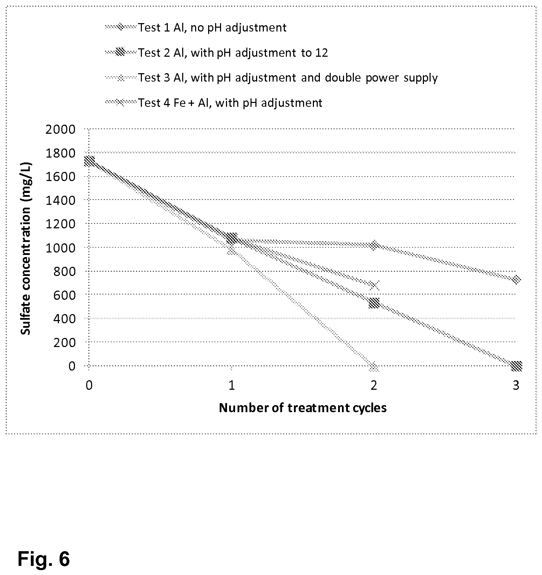

The test results of sulphate removal in electrocoagulation using aluminium or combination of aluminium and iron anodes are show in Figure 6. The Figure 6 shows that when EC treatment conditions are not controlled with pH adjustment to 12 with lime milk, the sulphate removal will be limited (Test 1). The reason for this is the water pH decreases due protons released during ettringite precipitation, and the addition of lime milk provides sufficient amount of calcium for ettringite precipitation. Two EC treatment cycles in Test 2 with pH adjustment to 12 in between is already sufficient to reduce sulphate concentration from 1730 mg/l to 534 mg/l, and third treatment cycle resulted in final sulphate concentration of 15 mg/l. The used volumes of lime milk for pH adjustment were small (maximum 55 ml per 3 I of water), thus the sulphate removal is result of precipitation as ettringite or corresponding calcium aluminium sulfates and dilution caused by lime milk addition has only minimal effect on the decrease of sulphate concentration. The doubling of power supply (Test 3) increased the sulphate removal kinetics remarkably: two treatment cycles resulted in residual sulphate concentration of 24 mg/l, while in Test 2 similar sulphate level was achieved only after three subsequent EC treatment cycles. The use of both aluminium and iron anodes in Test 4 resulted in similar sulphate removal rate as observed in Test 2, as sulphate concentration decreased from 1730 to 680 mg/l with two EC treatment cycles. However, the iron as coagulant may improve the solid/liquid separation properties of the EC treated slurry.

It will be obvious to a person skilled in the art that, as the technology advances, the inventive concept can be implemented in various ways. The invention and its embodiments are not limited to the examples described above but may vary within the scope of the claims.

## Claims

1. A method of removing sulphate and soluble metals such as calcium from water, which method comprises steps of
a) precipitating a first part of the sulphate from the water by contacting the water with a first calcium compound and adjusting pH of the water to a range of from 10.5 to 13, wherein a first sludge containing gypsum and metal hydroxides is formed,
b) subjecting, in one or more electrocoagulation units, the first sludge containing gypsum to the presence of at least one set of aluminium anodes to dissolve aluminium from said at least one set of aluminium anodes, or to the presence of at least one set of iron anode and aluminium anode to dissolve iron and aluminium from said at least one set of iron anode and aluminium anode, wherein in the step b) a second part of sulphate is precipitated as ettringite, which step b) is followed by a balancing step as a separate step, which balancing step is for providing the required retention time for precipitation of sulphate and in which balancing step the sludge is contacted with a second calcium compound for ensuring the optimal conditions for completing sulphate precipitation, wherein in the balancing step the pH of the process liquid is adjusted to the range of from 10.5 to 13 by using the second calcium compound,
c) conducting the sludge formed in step a) and in step b) to solid-liquid separation, wherein precipitated solids are separated from the water,
d) neutralizing the water received from step c), wherein water decreased in sulphate and soluble metal such as calcium content is provided.

2. A method according to claim 1, wherein further in the step b) a third part of sulphate is precipitated as aluminium sulphate hydroxides and/or iron-aluminium sulphate hydroxides.

3. The method according to any one of the preceding claims, wherein the water is process water, effluent or sulphate-containing water, such as mine water, recycle water from a concentrator or discharge water from the concentrator.

4. The method according to any one of the preceding claims wherein the first calcium compound and the second calcium compound are selected independently from the group consisting of calcium hydroxide, calcium oxide, calcium carbonate and a mixture thereof.

5. The method according to any one of the preceding claims, wherein the method comprises two or more electrocoagulation units connected in series.

6. The method according to any one of the preceding claims, wherein the method comprises two or more electrocoagulation units connected in parallel.

7. The method according to any one of the preceding claims, wherein the retention time in step b) including the balancing step is from 5 to 60 minutes.

8. The method according to any one of the preceding claims, wherein the neutralisation step is performed by diluting the liquid obtained from the first separation step with another water source or by contacting the liquid obtained from the first separation step with a neutralising agent for neutralising the liquid and precipitating calcium contained in the liquid as calcium compound.

9. The method according to any one of the preceding claims, wherein the method comprises recycling part of the water received from step c) to the electrocoagulation thereby diluting the first sludge containing gypsum.

## Patentansprüche

1. Verfahren zur Entfernung von Sulfat und löslichen Metallen, wie Kalzium, aus Wasser, wobei das Verfahren folgende Schritte umfasst
a) Ausfällen eines ersten Teils des Sulfats aus dem Wasser durch Kontaktieren des Wassers mit einer ersten Kalziumverbindung und Einstellen des pH-Wertes des Wassers auf einen Bereich von 10,5 bis 13, wobei ein erster Schlamm, der Gips und Metallhydroxide enthält, gebildet wird,
b) Unterwerfen des ersten gipshaltigen Schlamms in einer oder mehreren Elektrokoagulationseinheiten der Gegenwart von mindestens einem Satz Aluminiumanoden, um Aluminium aus dem mindestens einen Satz von Aluminiumanoden zu lösen, oder der Gegenwart von mindestens einem Satz Eisen- und Aluminiumanoden, um Eisen und Aluminium aus dem mindestens einen Satz Eisen- und Aluminiumanoden zu lösen, wobei in Schritt b) ein zweiter Teil des Sulfats als Ettringit ausgefällt wird, wobei sich an den Schritt b) ein Ausgleichsschritt als separater Schritt anschließt, wobei der Ausgleichsschritt dazu dient, die erforderliche Verweilzeit für die Sulfatfällung bereitzustellen, und wobei in dem Ausgleichsschritt der Schlamm mit einer zweiten Calciumverbindung in Kontakt gebracht wird, um die optimalen Bedingungen für die vollständige Sulfatfällung sicherzustellen, wobei in dem Ausgleichsschritt der pH-Wert der Prozessflüssigkeit auf den Bereich von 10,5 bis 13 durch Verwendung der zweiten Calciumverbindung eingestellt wird,
c) Führen des in Schritt a) und in Schritt b) gebildeten Schlamms zur Fest-Flüssig-Trennung, wobei ausgefällte Feststoffe vom Wasser abgetrennt werden,
d) Neutralisieren des aus Schritt c) erhaltenen Wassers, wobei Wasser mit verringertem Sulfat- und löslichem Metallgehalt, wie z.B. Kalzium, bereitgestellt wird.

2. Verfahren nach Anspruch 1, wobei weiter in Schritt b) ein dritter Teil des Sulfats als Aluminiumsulfathydroxide und/oder Eisen-Aluminiumsulfathydroxide ausgefällt wird.

3. Verfahren nach einem der vorherigen Ansprüche, bei dem das Wasser Prozesswasser, Abwasser oder sulfathaltiges Wasser, wie z.B. Grubenwasser, Recyclingwasser aus einem Konzentrator oder Ablasswasser aus dem Konzentrator ist.

4. Verfahren nach einem der vorherigen Ansprüche, wobei die erste Calciumverbindung und die zweite Calciumverbindung unabhängig voneinander aus der Gruppe ausgewählt werden, die aus Calciumhydroxid, Calciumoxid, Calciumcarbonat und einer Mischung derselben besteht.

5. Verfahren nach einem der vorherigen Ansprüche, wobei das Verfahren zwei oder mehr in Reihe geschaltete Elektrokoagulationseinheiten umfasst.

6. Verfahren nach einem der vorherigen Ansprüche, wobei das Verfahren zwei oder mehr parallel geschaltete Elektrokoagulationseinheiten umfasst.

7. Verfahren nach einem der vorherigen Ansprüche, wobei die Verweildauer in Schritt b) einschließlich des Ausgleichsschritts 5 bis 60 Minuten beträgt.

8. Verfahren nach einem der vorherigen Ansprüche, wobei der Neutralisationsschritt durch Verdünnung der aus dem ersten Trennschritt erhaltenen Flüssigkeit mit einer anderen Wasserquelle oder durch Kontaktieren der aus dem ersten Trennschritt erhaltenen Flüssigkeit mit einem Neutralisationsmittel zur Neutralisation der Flüssigkeit und Ausfällung von in der Flüssigkeit als Calciumverbindung enthaltenem Calcium durchgeführt wird.

9. Verfahren nach einem der vorherigen Ansprüche, wobei das Verfahren die Rückführung eines Teils des aus Schritt c) erhaltenen Wassers zur Elektrokoagulation umfasst, wodurch der erste gipshaltige Schlamm verdünnt wird.

## Revendications

1. Procédé pour éliminer les sulfates et les métaux solubles tels que le calcium dans l'eau, lequel procédé comprend les étapes suivantes :
a) précipitation d'une première partie des sulfates à partir de l'eau par mise en contact de l'eau avec un premier composé du calcium et ajustement du pH de l'eau dans la plage allant de 10,5 à 13, où une première boue contenant du gypse et des hydroxydes métalliques est formée,
b) soumission, dans une ou plusieurs unités de coagulation, de la première boue contenant du gypse, à la présence d'au moins un jeu d'anodes en aluminium pour que de l'aluminium dudit au moins jeu d'anodes en aluminium se dissolve, ou à la présence d'au moins un jeu d'une anode en fer et d'une anode en aluminium pour que du fer et de l'aluminium dudit au moins un jeu d'une anode en fer et d'une anode en aluminium se dissolvent, où, dans l'étape b), une deuxième partie des sulfates est précipitée sous forme d'ettringite, laquelle étape b) est suivie d'une étape d'équilibrage sous la forme d'une étape séparée, laquelle étape d'équilibrage sert à offrir le temps de séjour requis pour la précipitation des sulfates et où, dans l'étape d'équilibrage, la boue est mise en contact avec un deuxième composé du calcium pour que soient assurées des conditions optimales pour achever la précipitation des sulfates, et où, dans l'étape d'équilibrage, le pH du liquide de traitement est ajusté dans la plage allant de 10,5 à 13 par utilisation du deuxième composé du calcium,
c) amenée de la boue formée dans l'étape a) et dans l'étape b) à une séparation solide-liquide, dans laquelle les solides précipités sont séparés de l'eau,
d) neutralisation de l'eau reçue de l'étape c), où de l'eau ayant une teneur réduite en sulfates et en métaux solubles, telle que la teneur en calcium, est obtenue.

2. Procédé selon la revendication 1, dans lequel en outre, dans l'étape b), une troisième partie des sulfates est précipitée sous la forme d'hydroxydes de sulfate d'aluminium et/ou d'hydroxydes de sulfate de fer et d'aluminium.

3. Procédé selon l'une quelconque des revendications précédentes, dans lequel l'eau est de l'eau de traitement, un effluent ou de l'eau contenant des sulfates, telle que de l'eau de mine, de l'eau de recyclage provenant d'un concentrateur, ou de l'eau usée provenant du concentrateur.

4. Procédé selon l'une quelconque des revendications précédentes, dans lequel le premier composé du calcium et le deuxième composé du calcium sont choisis indépendamment dans le groupe constitué par l'hydroxyde de calcium, l'oxyde de calcium, le carbonate de calcium et leurs mélanges.

5. Procédé selon l'une quelconque des revendications précédentes, lequel procédé comprend deux ou plus de deux unités d'électrocoagulation connectées en série.

6. Procédé selon l'une quelconque des revendications précédentes, lequel procédé comprend deux ou plus de deux unités d'électrocoagulation connectées en parallèle.

7. Procédé selon l'une quelconque des revendications précédentes, dans lequel le temps de séjour dans l'étape b) comprenant l'étape d'équilibrage est de 5 à 60 minutes.

8. Procédé selon l'une quelconque des revendications précédentes, dans lequel l'étape de neutralisation est effectuée par dilution du liquide obtenu à partir de la première étape de séparation avec une autre source d'eau ou par mise en contact du liquide obtenu à partir de la première étape de neutralisation avec un agent neutralisant pour neutraliser le liquide et précipiter le calcium contenu dans le liquide sous la forme d'un composé du calcium.

9. Procédé selon l'une quelconque des revendications précédentes, lequel procédé comprend le recyclage d'une partie de l'eau reçue à partir de l'étape c) vers l'électrocoagulation, ce qui dilue ainsi la première boue contenant du gypse.
